# FASCICULE DE BREVET EUROPEEN

(11) **EP 0 527 074 B1**
(45) Date de publication et mention de la délivrance du brevet: **21.09.1994**
(21) Numéro de dépôt: 92402091.0
(22) Date de dépôt: 20.07.1992
(51) Int. Cl.: B60J 10/08

(54) **Perfectionnements aux profilés en plastomère à section en U, destinés notamment à équiper des rebords saillants de carrosseries d'automobiles ou similaires**
Verbesserungen an U-förmigen Dichtungsprofilen für Befestigung an den Rändern der Fahrzeugkarosserien oder dergleichen
Improvements to sealing strips with U section for use on the edges of the body of cars or similar

(30) Priorité: 05.08.1991 FR 9109950
(43) Date de publication de la demande: 10.02.1993
(73) Titulaire: ETABLISSEMENTS MESNEL SOCIETE ANONYME DITE :, F-78420 Carrières-Sur-Seine (FR)
(72) Inventeur: Mesnel, François, F-92200 Neuilly-sur-Seine (FR); Mesnel, Gérard, F-78420 Carrieres-sur-Seine (FR)
(74) Mandataire: Jolly, Jean-Pierre

(56) Documents cités:
- FR-A- 2 283 299
- FR-A- 2 370 206
- FR-A- 2 520 467
- FR-A- 2 635 366
- GB-A- 2 181 698
- GB-A- 2 220 969

## Description

L'invention concerne des perfectionnements apportés aux profilés en plastomère à section en U, destinés notamment à équiper des rebords saillants de carrosseries d'automobiles ou similaires.

De tels profilés présentent généralement une armature métallique interne, gainée d'un polymère. Ils sont destinés à coiffer des rebords métalliques externes de carrosserie, soit pour les dissimuler au regard et pour jouer alors le rôle d'enjoliveur, soit pour servir d'élément de fixation pour un organe d'étanchéité qui en est solidaire, par exemple de forme tubulaire, destiné à être déformé par compression entre un encadrement de porte et la porte associée. Ces profilés présentent, en outre, généralement, une ou plusieurs lèvres externes ayant un rôle d'enjolivement ou d'étanchéité.

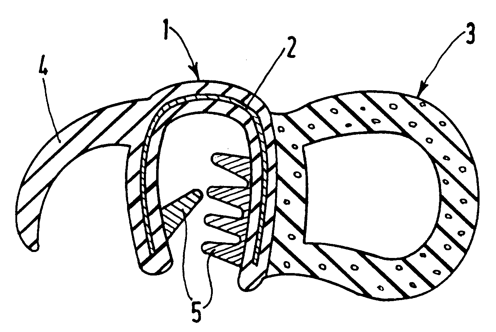

A titre d'exemple, un profilé de ce type est représenté en coupe transversale sur la figure unique du dessin annexé.

On y voit le corps 1 du profilé en élastomère à section en U, équipé d'une armature métallique interne 2. D'un côté du corps 1 est prévu un profilé tubulaire 3, formant bourrelet, par exemple en caoutchouc cellulaire, destiné à servir d'organe d'étanchéité entre une porte et l'encadrement de porte associé, tandis qu'une lèvre 4 dite "cosmétique" fait saillie vers l'extérieur de l'autre côté du profilé et a un simple rôle d'enjolivement. Le corps 1, le profilé 3 et la lèvre 4 peuvent être réalisés en une seule phase par coextrusion.

Ces profilés à section en U doivent naturellement pincer fermement le rebord métallique qu'ils coiffent et, dans ce but, des lèvres 5 font habituellement saillie sur les faces internes qui se font vis-à-vis des branches du corps 1 à section en U. Ces lèvres 5 sont inclinées, de manière à pouvoir s'escamoter lorsque le profilé est mis en place et, en revanche, à s'opposer à l'arrachement de celui-ci, une fois le profilé disposé sur le rebord métallique. Ces lèvres 5 peuvent être identiques ou différentes et être disposées de façon symétrique ou non par rapport au plan longitudinal médian du profilé. Elles peuvent aussi être en la même matière que celle du corps 1 du profilé ou en un matériau différent coextrudé avec celui-ci.

C'est plutôt cette seconde solution que l'on retient habituellement, car on peut ainsi utiliser, pour réaliser ces lèvres, un matériau mieux adapté à leur fonction. Comme décrit par exemple dans FR-A-2 370 206, on a donc tendance, de nos jours, pour la réalisation des lèvres 5, à utiliser une matière plastique relativement molle, qui facilite la mise en place du profilé, et dont le coefficient de frottement est élevé, pour s'opposer à l'arrachement du profilé. Des matières plastiques présentant ces propriétés et que l'on utilise dans ce but sont par exemple les suivantes : polychlorure de vinyle plastifié ou alliages de polychlorure de vinyle plastifié avec des polymères compatibles, notamment le caoutchouc naturel.

Elles présentent toutefois l'inconvénient de se déformer à chaud, ce qui constitue un handicap sérieux, lorsque les véhicules équipés de tels profilés demeurent de longues heures au soleil pendant les mois d'été. Pour éviter que l'effet de pincement du profilé ne s'amoindrisse, on est donc amené à l'équiper de rubans adhésifs qui le collent au rebord métallique qu'il équipe, mais cette solution est naturellement très coûteuse.

La présente invention vise à remédier à ces inconvénients.

Un but de l'invention est donc de proposer, pour la réalisation des lèvres de maintien en position de tels profilés à section en U, un matériau, qui, tout en facilitant la mise en place du profilé sur son support et en s'opposant à son arrachement de ce support, ne se déforme pas lorsqu'il est exposé au soleil et présente une tenue en température suffisante, en plein été, même dans des pays relativement chauds.

Un autre but de l'invention est de proposer des profilés à section en U de ce type, dont le maintien en position sur le rebord métallique qu'ils équipent est meilleur que pour les profilés de la technique connue.

A cet effet, l'invention a pour objet un profilé à section en U, comprenant une armature métallique, gainée au moins partiellement d'une matière plastomère du type du polychlorure de vinyle plastifié, et destiné à coiffer un rebord saillant, notamment de carrosserie d'automobile, l'une des faces internes du U présentant au moins une lèvre dirigée vers le rebord saillant, cette lèvre étant en un matériau élastomère thermoplastique compatible avec celui gainant l'armature et assurant une liaison par fusion avec celui-ci au cours de leur coextrusion (Profilé du type divulgué par FR-A-2 370 206), ce profilé étant caractérisé en ce que le matériau constitutif de la lèvre a un point de ramollissement net, c'est-à-dire un point de ramollissement où le polymère perd sa viscosité élastique pour devenir purement thermoplastique lorsque la température varie au plus de 10°C, compris entre 150 et 200°C et une dureté Shore, à 22°C, comprise entre 75 et 80.

De préférence, le matériau élastomère présentera des caractéristiques élastiques élevées, supérieures à celles des élastomères usuellement utilisés pour cette application. C'est ainsi que son module à 100% d'allongement sera avantageusement d'au moins 3 Newton/mm² et que sa résilience à l'impact (Norme DIN 53512) sera supérieure ou égale à 45%.

Du fait du point de ramollissement net de l'élastomère dont sont constituées la ou les lèvres du profilé, celles-ci conserveront toute leur élasticité, sans déformation rémanente, dans tout le domaine des températures auxquelles sont usuellement soumis les profilés qui équipent des carrosseries d'automobiles.

Par ailleurs, en raison de leur dureté élevée, nettement supérieure à celle des matériaux habituellement utilisés dans ce but, qui est de l'ordre de 60 à 65 Shore, combinée avec un module de déformation également élevé, la ou les lèvres du profilé, sollicitées en traction, auront tendance à s'accrocher au rebord métallique équipé de ce profilé et à s'opposer aux tentatives de retournement permettant leur arrachement.

Non seulement on observera une excellente retenue des lèvres par le métal à la température ambiante, mais également après des essais de vieillissement à la chambre du profilé, essais spécifiques aux constructeurs d'automobiles, au cours desquels le profilé est soumis, pendant une heure, à une température de 90°C. En effet, du fait de son point de ramollissement plus élevé que dans le cas des élastomères habituellement utilisés, l'élastomère employé conformément à l'invention est moins plastique à cette température de 80°C et il présente donc des propriétés d'élasticité et de dureté proches de celles de la température ambiante.

Pour la mise en oeuvre de l'invention, on pourra utiliser tous les matériaux élastomères présentant les caractéristiques de dureté, de thermoplasticité et, de préférence, d'élasticité mentionnées ci-dessus.

On mentionnera, à titre d'exemple :
- d'une part, les composés de la famille des polyamides tels que les polyéthers blocs amide, notamment ceux commercialisés sous l'appellation "PEBAX" (marque déposée) par la Société ATOCHEM.
- d'autre part, les polyuréthanes thermoplastiques extrudables du type polyéther ou polyester, notamment ceux commercialisés sous l'appellation MELIOPURE A 78 (marque déposée) par la Société SANDOZ.

Cette liste n'a naturellement aucun caractère limitatif.

L'invention apporte donc un moyen simple et facile à mettre en oeuvre pour améliorer la mise en place, le maintien en position et la tenue en température des profilés à section en U, en élastomère armé, destinés à équiper des rebords saillants, notamment de carrosserie.

On notera à ce propos que, pour remédier aux inconvénients des profilés de la technique antérieure, la Demanderesse va à l'encontre de ce qu'enseignait cette technique connue, puisqu'alors qu'on avait toujours utilisé pour réaliser les lèvres de ces profilés une matière aussi molle que possible, la Demanderesse propose d'utiliser une matière de dureté nettement supérieure, combinée de préférence avec un module de déformation également plus élevé.

Les élastomères utilisés dans le cadre de la présente invention auront, de préférence, après extrusion, une surface extérieure aussi lisse que possible afin de majorer les propriétés d'adhérence des lèvres au rebord saillant coiffé par le profilé et d'obtenir ainsi un véritable effet de blocage des lèvres sur ce rebord.

## Revendications

1. Profilé (1) à section en U, comprenant une armature métallique (2) gainée au moins partiellement d'une matière plastomère du type du polychlorure de vinyle plastifié et destiné à coiffer un rebord saillant, notamment de carrosserie d'automobile, l'une des faces internes du U présentant au moins une lèvre (5) dirigée vers le rebord saillant, cette lèvre étant en un matériau élastomère thermoplastique compatible avec celui gainant l'armature et assurant une liaison par fusion avec celui-ci au cours de leur coextrusion, ce profilé étant caractérisé en ce que le matériau constitutif de la lèvre (5) a un point de ramollissement net, c'est-à-dire un point de ramollissement où le polymère perd sa viscosité élastique pour devenir purement thermoplastique lorsque la température varie au plus de 10°C, compris entre 150 et 200°C et une dureté Shore, à 22°C, comprise entre 75 et 80.

2. Profilé selon la revendication 1, caractérisé en ce que le matériau élastomère constitutif des lèvres (5) présente un module à 100% d'allongement d'au moins 3 Newton/mm² et une résilience à l'impact, conformément à la norme DIN 53512, supérieure ou égale à 45%.

3. Profilé selon l'une des revendications 1 et 2, caractérisé en ce que le matériau élastomère thermoplastique est un composé de la famille des polyamides tel qu'un polyéther blocs amide.

4. Profilé selon l'une des revendications 1 et 2, caractérisé en ce que le matériau élastomère thermoplastique est un polyuréthane thermoplastique extrudable de type polyéther ou polyester.

5. Profilé selon l'une des revendications 1 à 4, caractérisé en ce que la ou lesdites lèvres (5) en matériau élastomère thermoplastique ont une surface externe lisse.

## Claims

1. A shaped member (1) of U section comprising a metal reinforcement (2) at least partially sheathed with a plastomer material of the plasticised polyvinyl chloride type and intended to fit over a projecting edge, in particular of a motor vehicle body, one of the internal faces of the U-shape having at least one lip (5) directed towards the projecting edge, said lip being of a thermoplastic elastomer material compatible with that sheathing the reinforcement and ensuring connection by fusion with the material sheathing the reinforcement in the course of co-extrusion thereof, said shaped member being characterised in that the material constituting the lip (5) has a clear-cut softening point, that is to say a softening point at which the polymer loses its elastic viscosity to become purely thermoplastic when the temperature varies at most by 10°C, between 150 and 200°C, and a Shore hardness at 22°C of between 75 and 80.

2. A shaped member according to claim 1 characterised in that the elastomer material constituting the lips (5) has a modulus at 100% of elongation of at least 3 Newtons/mm² and an impact strength, in accordance with the standard DIN 53512, of greater than or equal to 45%.

3. A shaped member according to one of claims 1 and 2 characterised in that the thermoplastic elastomer material is a compound of the family of polyamides such as a block polyether amide.

4. A shaped member according to one of claims 1 and 2 characterised in that the thermoplastic elastomer material is an extrudable thermoplastic polyurethane of polyether or polyester type.

5. A shaped member according to one of claims 1 to 4 characterised in that said lip or lips (5) of thermoplastic elastomer material have a smooth external surface.

## Patentansprüche

1. Profil (1) mit U-förmigem Schnitt, bestehend aus einer mindestens teils von plastomerischen Kunststoff vom Typ PVC umgebenen Metallarmierung (2) für die Abdeckung vorspringender Ränder, insbesondere bei KFZ-Karosserien, bei dem eine der Innenseiten des U mindestens eine zur vorspringenden Kante gerichteten Lippe (5) aufweist, die aus einem elastomerischen, thermoplastischen Werkstoff besteht, der mit dem Werkstoff, der die Armierung umgibt, kompatibel ist, und eine Verbindung durch Verschmelzung beider Werkstoffe während der Koextrusion gewährleistet, dadurch gekennzeichnet, daß das Material, aus dem die Lippe (5) besteht, einen bestimmten, jähen Weichwerdepunkt besitzt, das heißt einen Punkt, an dem das Polymer seine elastische Viskosität verliert und rein thermoplastisch bei Temperaturschwankungen von maximal 10°C zwischen 150 und 200°C wird, und bei einer Shore-Härte von 75 bis 80 bei 22°C.

2. Profil nach Anspruch 1, dadurch gekennzeichnet, daß bei 100%iger Dehnung der Modul des elastomerischen Werkstoffs, aus dem die Lippen (5) bestehen, mindestens 3 Newton/mm² beträgt und seine Aufprallelastizität, entsprechend DIN-Norm 53512 mindestens 45% beträgt.

3. Profil nach einem der Ansprüche 1 oder 2, dadurch gekennzeichnet, daß der elastomerische, thermoplastische Werkstoff eine Verbindung aus der Familie der Polyamide ist, z.B. Polyetherblockamide.

4. Profil nach einem der Ansprüche 1 oder 2, dadurch gekennzeichnet, daß der elastomerische, thermoplastische Werkstoff ein thermoplastisches, extrudierbares Polyurethan ist, vom Typ Polyether bzw. Polyester.

5. Profil nach einem der Ansprüche 1 bis 4, dadurch gekennzeichnet, daß die Lippe bzw. Lippen (5) aus thermoplastischem Elastomer eine glatte äußere Oberfläche besitzen.
